Europäisches Patentamt

European Patent Office

Office européen des brevets

(11) Numéro de publication : **0 317 399 B1**

(12) **FASCICULE DE BREVET EUROPEEN**

(45) Date de publication du fascicule du brevet :
**22.04.92 Bulletin 92/17**

(51) Int. Cl.$^5$ : **B01D 67/00**

(21) Numéro de dépôt : **88402827.5**

(22) Date de dépôt : **10.11.88**

(54) **Membrane microporeuse obtenue par irradiation de deux faces et procédé d'obtention correspondant.**

(30) Priorité : **13.11.87 FR 8715687**

(43) Date de publication de la demande :
**24.05.89 Bulletin 89/21**

(45) Mention de la délivrance du brevet :
**22.04.92 Bulletin 92/17**

(84) Etats contractants désignés :
**BE CH DE GB IT LI NL SE**

(56) Documents cités :
**WO-A-87/05850**
**DE-B- 1 436 322**
**GB-A- 1 375 204**
**US-A- 2 345 080**
**US-A- 3 852 134**

(73) Titulaire : **COMMISSARIAT A L'ENERGIE ATOMIQUE Etablissement de Caractère Scientifique Technique et Industriel 31/33, rue de la Fédération F-75015 Paris (FR)**
Titulaire : **CENTRE NATIONAL DE LA RECHERCHE SCIENTIFIQUE (CNRS) 15, Quai Anatole France F-75700 Paris Cedex 07 (FR)**

(72) Inventeur : **Toulemonde, Marcel 26, rue des Clos F-14000 Caen (FR)**
Inventeur : **Balanzat, Emmanuel 30, rue Saint Martin F-14000 Caen (FR)**

(74) Mandataire : **Mongrédien, André et al c/o BREVATOME 25, rue de Ponthieu F-75008 Paris (FR)**

## Description

La présente invention concerne des membranes microporeuses obtenues par irradiation des deux faces ainsi que le procédé d'obtention correspondant.

On sait déjà qu'on peut réaliser des membranes microporeuses, utilisables en particulier pour la filtration, par irradiation de particules ionisantes qui créent des chaînes de défauts dans des membranes de verre, de cristal ou de polymère correspondant à leurs trajets. Les abords immédiats de ces défauts structuraux sont très sensibles à certains agents chimiques qui les attaquent à une vitesse beaucoup plus élevée que le reste de la membrane. Des pores sont ainsi créés dont les axes correspondent au trajet des particules ionisantes. Le diamètre des pores dépend essentiellement de la durée d'exposition à ces agents : l'élargissement est tout d'abord très rapide, puis de plus en plus faible au fur et à mesure que l'on attaque des parties plus éloignées des défauts.

Un problème apparaît toutefois dans la mesure où les trajets des particules ionisantes sont aléatoires et peuvent donc parfois être très proches et conduire à des pores multiples dont les sections se chevauchent partiellement. De tels pores équivalent en fait, du point de vue des propriétés de filtration, à un pore unique de diamètre plus important et qui détruit donc la sélectivité de la membrane en laissant passer des particules qui auraient dû normalement être arrêtées.

Ce problème est particulièrement important pour les membranes qui doivent posséder un gros débit, car on est conduit à leur attribuer une porosité plus importante par une irradiation plus dense de particules : mais alors la probabilité d'apparition de ces pores multiples s'accroît énormément.

L'invention permet de résoudre ce problème. Elle concerne en effet une membrane microporeuse obtenue par deux irradiations distinctes, successivement sur les deux faces de la membrane, et par des particules dont l'énergie est insuffisante pour traverser entièrement la membrane, mais toutefois suffisante pour rendre possible l'intersection de traces de particules ayant bombardé la membrane au cours des deux expositions dans une zone médiane de celle-ci.

On procède ensuite à l'attaque chimique de façon classique. On obtient ainsi des pores qui ne traversent pas la membrane, et des pores traversant la membrane et qui sont formés en fait de deux pores distincts résultant respectivement des deux irradiations et qui présentent une intersection.

Plus précisément, l'invention concerne une membrane microporeuse obtenue par irradiation de particules suivie d'une attaque chimique créant des pores le long des traces d'impact des particules, caractérisée en ce qu'elle comprend un premier réseau de pores débouchant uniquement sur une face de la membrane, un second réseau de pores débouchant uniquement sur l'autre face de la membrane, et en ce que des pores du premier réseau rencontrent des pores du second réseau dans une zone médiane de la membrane.

De façon avantageuse, les pores d'au moins un réseau pénètrent obliquement dans la membrane, et de préférence, les pores du premier réseau rencontrent les pores du second réseau en faisant un angle de 160° environ.

On va maintenant décrire plus en détail l'invention à l'aide des figures suivantes, données à titre illustratif et non limitatif :

– la figure 1 représente un dispositif permettant l'obtention de membranes selon l'invention ;
– la figure 2 représente une coupe transversale d'une membrane après les irradiations selon l'invention selon la ligne II-II de la figure 1 ;
– la figure 3 représente la membrane déjà illustrée figure 2, mais après attaque chimique ;
– la figure 4 représente une vue en perspective d'une membrane après attaque chimique montrant en particulier sa surface ; et
– la figure 5 représente les principales configurations de pores que l'on peut observer sur une membrane.

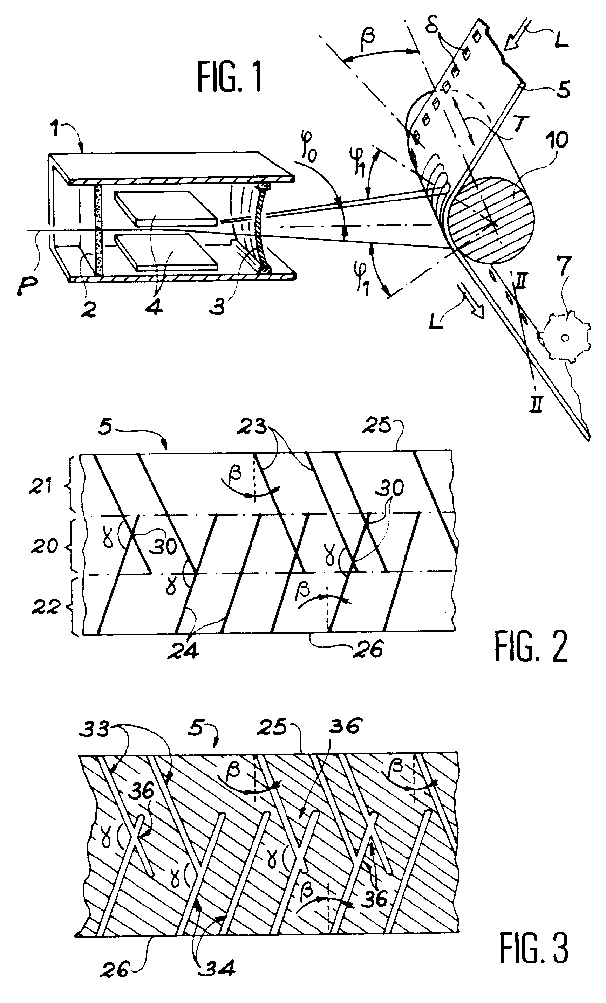

La figure 1 représente l'extrémité d'un accélérateur de particules 1 muni successivement d'une feuille de carbone 2 qui capte une partie du nuage électronique d'ions composant un faisceau P et augmente ainsi leur charge électrique, un aimant 4 qui crée un champ magnétique variable avec le temps et dévie donc le faisceau P d'une déflexion variable, et une paroi 3 étanche qui permet, au prix d'une diminution acceptable de l'énergie des ions, de placer une membrane 5 à irradier, disposée sur le trajet du faisceau P, dans l'air ambiant ou dans une atmosphère d'oxygène qui rendra l'attaque chimique plus facile. L'épaisseur de la membrane 5 peut varier entre 15 et 250 micromètres environ.

La variation du champ magnétique produit par les aimants 4 permet donc de faire balayer la membrane 5 transversalement, suivant les flèches T, par le faisceau P.

Les particules du faisceau P peuvent être par exemple des ions d'argon, de krypton ou de xénon. La source d'ions peut être continue ou intermittente. Dans le premier cas, il est nécessaire que le balayage s'effectue à une vitesse constante pour obtenir une densité d'irradiation homogène sur la membrane 5 ; dans le second cas, les balayages doivent être synchronisés sur les moments d'émission du faisceau P.

La membrane 5 défile devant le faisceau P dans un sens longitudinal indiqué par les flèches L à l'aide d'une roue dentée 7 dont les dents pénètrent dans des encoches 8 disposées sur sa bordure à la façon des encoches des pellicules photographiques. La membrane 5 peut défiler en étant tendue droite devant le faisceau de particules P : elle peut aussi être -ce que l'on représente ici, car plus avantageux- tendue incurvée sur un rouleau 10 disposé devant le faisceau de particules P. Le faisceau P est alors prévu divergent et en forme d'éventail d'angle d'ouverture 2 $\varphi_0$ dans le sens longitudinal L. Il en résulte que les particules irradient la membrane 5 selon une incidence qui peut varier entre + $\varphi_1$ et - $\varphi_1$ et qui est fonction de $\varphi_0$ et du rayon du rouleau 10.

Selon l'invention, la membrane 5 est tendue obliquement suivant le sens transversal devant le faisceau P. Avec le dispositif de la figure 1, l'axe de rotation du rouleau 10 fait donc un angle $\beta$+90° avec la direction moyenne du faisceau P, non déviée par l'aimant 4 et en faisant abstraction de la divergence 2 $\varphi_0$.

L'accélérateur de particules 1 est avantageux car il permet de régler à volonté l'énergie des particules du faisceau P. Toutefois, il n'est pas indispensable à la mise en oeuvre de l'invention et peut être remplacé par une source de matière fissile.

On laisse la membrane 5 défiler ainsi devant le faisceau P, puis on la retourne et on l'irradie à partir de l'autre face. Les particules ont une énergie insuffisante pour traverser entièrement la membrane 5, mais toutefois suffisante pour pouvoir atteindre, dans une zone médiane 20 au coeur de la membrane 5, des endroits par lesquels des particules ayant irradié la membrane 5 par son autre face sont passées au cours de l'autre irradiation. C'est ce qu'illustre la figure 2. On y représente par 23 les trajectoires de particules ayant pénétré par une des faces 25 de la membrane 5, et par 24 les traces de particules ayant pénétré dans la membrane 5 par son autre face 26. On peut distinguer trois zones dans la membrane 5 : deux zones superficielles 21 et 22 dans lesquelles on ne peut rencontrer respectivement que des traces 23 et 24, et une zone médiane 20 déjà mentionnée dans lesquelles on peut trouver simultanément les traces 23 et 24. On représente par 30 les intersections entre des traces 23 et 24.

Dans le cas où l'on emploie un accélérateur de particules, l'énergie de celles-ci peut être parfaitement réglée si bien que les épaisseurs des trois zones 20, 21 et 22 de la membrane restent uniformes et peuvent être parfaitement définies par l'utilisateur ; l'épaisseur de la zone 20 peut être comprise entre 10 et 200 micromètres, l'épaisseur des zones 21 et 22 entre 5 et 50 micromètres. Dans le cas d'une source de produits fissiles, on obtiendra des particules d'énergies plus hétérogènes, et il faudra accepter une moindre régularité de la membrane.

Dans le plan de coupe, l'incidence des traces 23 et 24 par rapport aux faces 25 et 26 est $\beta$ si l'on accepte de négliger les légères variations d'incidence produites par le balayage transversal du faisceau P. Les traces 23 et 24 font donc aux intersections 30 des angles approximatifs de 180°-2 $\beta$. Dans le cas plausible où $\beta$ est égal à 10°, cet angle d'intersection noté $\gamma$ est donc égal à 160°.

Il faut noter que dans un plan perpendiculaire au plan de coupe de la figure 2, l'incidence des traces 23 et 24 sur la membrane 5 est variable et comprise entre + $\varphi_1$ et - $\varphi_1$ comme on l'a vu plus haut.

La figure 3 représente la même membrane 5 après attaque chimique. Les traces 23 et 24 des particules du faisceau P correspondent physiquement à des chaînes de défauts structuraux qui ont été engendrés dans la membrane 5 lors du passage des particules et qui sont attaqués à une vitesse beaucoup plus importante que les parties saines lors de l'attaque chimique. Il en résulte que des pores 33 et 34 ont été creusés autour des traces 23 et 24 respectivement, et que leur diamètre dépend de la durée de l'attaque chimique. On constate qu'un certain nombre de pores 33 et 34 sont borgnes dans la membrane 5, mais que des couples de pores 33 et 34, correspondant aux traces de particules qui comportent une intersection 30, constituent maintenant des pores référencés globalement 36 et qui traversent complètement la membrane 5. Il est possible qu'un seul pore 33 débouche dans plusieurs pores 34 et réciproquement.

Les solides que la membrane 5 devra filtrer sont donc obligés de passer par les pores 36.

Dans un exemple concret de mise en oeuvre de l'invention, on a utilisé comme membrane 5 une pellicule de polycarbonate de 40 $\mu$m d'épaisseur. L'irradiation a été effectuée à l'aide d'un faisceau d'ions de krypton dont l'énergie d'entrée dans la membrane 5 est de 1,7 MeV par nucléon. Le faisceau était divergent de façon à irradier la pellicule sur une hauteur de 10 mm, alors que la largeur de balayage transversal était de quelques centaines de millimètre.

Le rouleau 10 avait un rayon de 15 mm et l'angle $\beta$ était égal à 10°.

L'intensité du faisceau P et la vitesse de défilement de la membrane 5 avaient été réglées de façon à obtenir une densité de trois cents millions d'impacts par centimètre carré sur chaque face.

Le traitement chimique a été effectué sous rayonnement ultraviolet d'une lampe de mercure à une dose de 20 mWh/cm$^2$. L'attaque chimique, effectuée dans de la soude 3N à 45°C, a duré cent minutes. On a obtenu des pores de diamètre de 0,2 $\mu$m.

D'autres exemples de réalisation possibles sont résumés sur le tableau I.

TABLEAU I - Exemples de réalisation

| e | E | N | C | T | t | D |
|-----|-----|------------------|---|----|-----|-----|
| 15 | 0,3 | $6.10^8$ | 3 | 45 | 100 | 0,2 |
| 40 | 1,7 | $3.10^8$ | 2 | 45 | 200 | 0,2 |
| 40 | 1,7 | $3,6.10^7$ | 3 | 65 | 100 | 1 |
| 250 | 9 | $1,2.10^7$ | 3 | 65 | 100 | 1 |
| 100 | 4 | $7,5.10^7$ | 2 | 65 | 80 | 0,4 |

e = épaisseur de la membrane 5 en micromètres,

E = énergie d'entrée des ions du faisceau P dans la membrane 5 en MeV par nucléon. Il s'agit d'ions Kr,

N = nombre d'impacts par centimètre carré,

C = normalité de l'attaquant chimique. Il s'agit de NaOH,

T = température de l'attaquant chimique en degrés Celsius,

t = durée de l'attaque chimique en minutes,

D = diamètre des pores en micromètres,

Dans tous les cas le faisceau irradie la pellicule sur une hauteur de 10 mm et le rouleau 10 a un rayon de 15 mm.

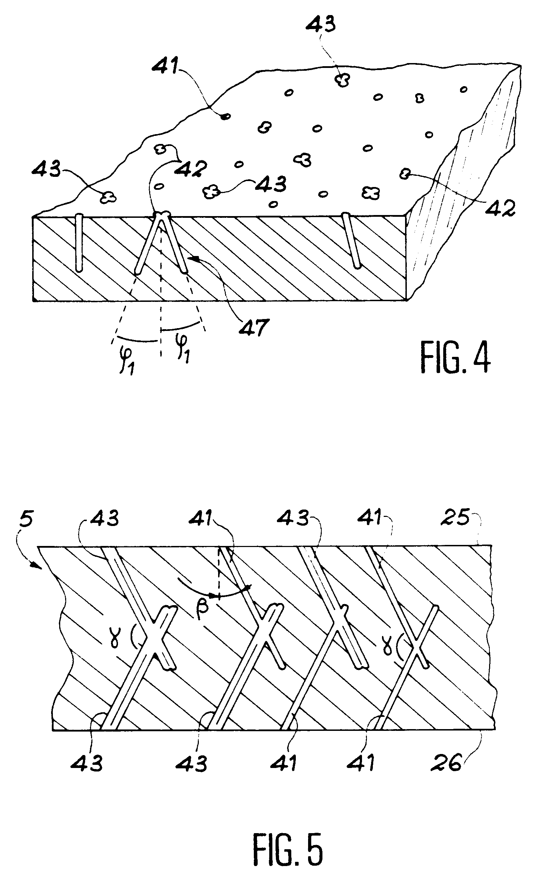

On va maintenant justifier l'intérêt de l'invention. On se reporte pour cela aux figures 4 et 5.

La figure 4 représente la surface d'une membrane 5 percée de pores. Comme les impacts des particules sont aléatoires, il est inévitable qu'apparaissent, à côté de pores simples 41, des pores doubles et multiples 42 et 43 obtenus par suite d'impacts très rapprochés de respectivement deux ou plus de deux particules. Ces pores se raccordent au cours de l'attaque chimique et produisent ainsi finalement un pore unique de plus grosse section. Les pores multiples 43, obtenus par jonction d'au moins trois pores simples, sont particulièrement nuisibles car leur section admet un cercle inscrit plus important que les diamètres des pores simples 41. Ils laissent donc passer des solides qui auraient dû normalement être arrêtés par la membrane 5 et détruisent ainsi la sélectivité de celle-ci.

Il est possible, au moyen du rouleau 10, d'empêcher dans une large mesure la création de ces pores multiples : comme les incidences des particules sont alors variables, deux pores qui sont confondus au départ sur une des faces de la membrane peuvent ensuite se séparer. C'est ce que représente le groupement 47 qui montre que la divergence des directions peut atteindre 2 $\varphi_1$. Mais ce perfectionnement est insuffisant quand on désire des membranes extrêmement sélectives.

La figure 5 représente quatre types différents de pores débouchants 36 selon l'invention : de gauche à droite sur la figure, on rencontre un pore multiple 43 débouchant sur la face 25 présentant une intersection avec un autre pore multiple 43 débouchant sur la face 26, un pore simple 41 (le raisonnement s'appliquerait également à un pore double 42) débouchant sur un pore multiple 43, un pore multiple 43 débouchant sur un pore simple 41, et un pore simple 41 débouchant sur un autre pore simple 41.

On voit immédiatement que seul le premier de ces types est nuisible à la sélectivité de la membrane 5 : dans le cas des deux types représentés au milieu de la figure 5, les pores simples 41 arrêtent les solides de plus gros diamètre qui auraient pu entrer dans les pores multiples 43. En d'autres termes, dans ces types mixtes présentant des raccordements entre pores de natures différentes, c'est le pore de plus petit diamètre qui détermine les propriétés filtrantes, c'est-à-dire le pore simple 41.

On peut donc conclure que les pores multiples 43 non débouchants sur les deux faces 25 et 26 ne sont pas forcément nuisibles à la sélectivité de la membrane 5. Comme leur proportion par rapport au nombre total de pores reste relativement faible (quelques pour cent), la proportion de pores du type représenté à l'extrême gauche de la figure 5, qui est égale au carré de cette proportion, est encore beaucoup plus faible.

Le gain de sélectivité par rapport aux membranes microporeuses usuelles est donc important, de l'ordre de 10, 100 ou 1000 selon les paramètres de l'irradiation : angle de divergence $\varphi_0$, angle $\varphi_1$ défini par le rouleau 10, porosité globale et profondeur de pénétration des pores. La probabilité de rétention de solides de diamètre supérieur à celui des pores 41 peut dépasser 99,999%.

Les membranes 5 selon l'invention sont intéressantes sous un autre aspect.

Tout d'abord, on peut accepter des porosités (rapport de la somme des sections des pores sur une face sur la surface de cette face) beaucoup plus importantes qu'avec des membranes classiques pour une sélectivité donnée. En effet, quand la porosité augmente, la proportion des pores multiples 43 augmente fortement. On peut estimer qu'avec des membranes classiques et dans des applications courantes, la porosité la plus importante que l'on peut accepter est de l'ordre de 10%. Pourtant, des porosités importantes sont intéressantes dans la mesure où elles permettent des débits de filtration plus importants. Avec les membranes 5 selon l'invention, on peut ignorer cette limitation et accepter des porosités de l'ordre de 30 à 35% qui correspondent à la limite au-delà de laquelle la membrane 5 n'a plus une résistance mécanique suffisante.

L'angle $\gamma$ que font les pores 33 et 34 à leur intersection résulte d'un compromis. Si les angles $\gamma$ sont trop proches de 180°, cela veut dire que les probabilités d'intersection de pores 33 et 34 sont faibles et que la porosité réelle des membranes 5 est faible également, ce qui nuit au débit. Si $\gamma$ devient trop petit, le trajet que doivent suivre les particules filtrées à travers la membrane 5 devient important, ce qui réduit également le débit de la membrane 5. L'angle égal à 160° donne les meilleurs résultats, mais il ne s'agit pas d'une valeur impérative qui conditionne une mise en oeuvre correcte de l'invention : on peut adopter des valeurs sensiblement différentes sans sortir du cadre de celle-ci.

Enfin, l'épaisseur de la zone médiane 20 par rapport aux zones superficielles 21 et 22 est un paramètre important dans la mesure où elle conditionne la probabilité pour les pores 33 et 34 de présenter des intersections. Si cette zone médiane 20 est épaisse, les intersections sont nombreuses et le débit autorisé par la membrane 5 important, d'autant plus qu'un même pore, par exemple 33, pourra présenter une intersection avec plusieurs pores 34 de l'autre type. Il faut toutefois garder à l'esprit que la zone médiane 20 dont la porosité est importante est aussi fragile, et que les zones superficielles 21 et 22, qui contribuent à la tenue mécanique de l'ensemble, ne peuvent être trop minces.

On peut préconiser, selon les membranes, des épaisseurs de 10 à 200 micromètres pour la zone médiane 20 et de 5 à 50 micromètres pour les zones superficielles 21 et 22.

## Revendications

1. Membrane microporeuse obtenue par irradiation de particules (P) suivie d'une attaque chimique créant des pores (33, 34) le long des traces d'impact (23, 24) des particules, caractérisée en ce qu'elle comprend un premier réseau (33) de pores débouchant uniquement sur une face (25) de la membrane (5), un second réseau de pores (34) débouchant uniquement sur l'autre face (26) de la membrane (5), et en ce que des pores du premier réseau (33) rencontrent des pores du second réseau (34) dans une zone médiane (20) de la membrane (5).

2. Membrane microporeuse suivant la revendication 1, caractérisée en ce que les pores d'au moins un réseau pénètrent obliquement dans la membrane.

3. Membrane microporeuse suivant la revendication 2, caractérisée en ce que les pores du premier réseau (33) rencontrent les pores du second réseau (34) en faisant un angle de 160° environ.

4. Membrane microporeuse suivant l'une quelconque des revendications 2 et 3, caractérisée en ce que les pores d'au moins un réseau pénètrent suivant des obliticités différentes($\pm j\phi_1$) dans la membrane.

5. Membrane microporeuse suivant l'une quelconque des revendications 1 à 4, caractérisée en ce que le rapport de la section totale des pores des réseaux (33, 34) sur la surface de la membrane est inférieur à 0,35.

6. Membrane microporeuse suivant l'une quelconque des revendications 1 à 5, caractérisée en ce que la zone médiane (20) de la membrane a une épaisseur comprise entre 10 et 200 micromètres.

7. Membrane microporeuse suivant l'une quelconque des revendications 1 à 6, caractérisée en ce que la zone médiane de la membrane est située entre deux zones superficielles (21, 22) d'épaisseur comprise entre 5 et 50 micromètres.

8. Procédé de fabrication de membranes microporeuses conformes à l'une quelconque des revendications précédentes, caractérisé en ce qu'il consiste à irradier les membranes (5) sur une face (25) par des particules (P) d'énergie insuffisante pour traverser les membranes, à retourner les membranes (5) pour les irradier sur l'autre face (26) par des particules (P) d'énergie insuffisante pour traverser les membranes, mais suffisante pour atteindre des parties des membranes irradiées avant retournement, et à exposer les membranes irradiées à un réactif chimique créant des pores autour des endroits où les particules (P) ont passé.

9. Procédé de fabrication de membranes microporeuses suivant la revendication 8, caractérisé en ce que les particules (P) sont des ions issus d'un accélérateur (1).

10. Procédé de fabrication de membranes microporeuses suivant la revendication 8, caractérisé en ce que les membranes (5) sont tendues et incurvées sur un rouleau (10).

**Patentansprüche**

1. Mikroporöse Membran, die durch Bestrahlung mit Teilchen (P) erhalten wird, die von einer chemischen Attacke, die Poren (33, 34) entlang der Einschlagsspuren (23, 24) der Teilchen erzeugt, gefolgt wird, dadurch gekennzeichnet, daß sie ein erstes Netz (33) von Poren, die einzig auf einer Seite (25) der Membran (5) enden, und ein zweites Netz von Poren (34), die einzig auf der anderen Seite (26) der Membran (5) enden, aufweist und daß die Poren des ersten Netzes (33) die Poren des zweiten Netzes (34) in einem mittleren Bereich (20) der Membran (5) treffen.

2. Mikroporöse Membran nach Anspruch 1, dadurch gekennzeichnet, daß die Poren von wenigstens einem Netz schräg in die Membran eindringen.

3. Mikroporöse Membran nach Anspruch 2, dadurch gekennzeichnet, daß die Poren des ersten Netzes (33) die Poren des zweiten Netzes (34) unter einem Winkel von ungefähr 160° treffen.

4. Mikroporöse Membran nach einem der Ansprüche 2 und 3, dadurch gekennzeichnet, daß die Poren von wenigstens einem Netz unter verschiedenen Neigungen ($\pm\varphi_1$) in die Membran eindringen.

5. Mikroporöse Membran nach einem der Ansprüche 1 bis 4, dadurch gekennzeichnet, daß das Verhältnis des Gesamtquerschnitts der Poren der Netze (33, 34) auf der Oberfläche der Membran kleiner als 0,35 ist.

6. Mikroporöse Membran nach einem der Ansprüche 1 bis 5, dadurch gekennzeichnet, daß der mittlere Bereich (20) der Membran eine Dicke zwischen 10 und 200 Mikrometern besitzt.

7. Mikroporöse Membran nach einem der Ansprüche 1 bis 6, dadurch gekennzeichnet, daß sich der mittlere Bereich zwischen zwei Oberflächenbereichen (21, 22) mit einer Dicke zwischen 5 und 50 Mikrometern befindet.

8. Verfahren zur Herstellung von mikroporösen Membranen entsprechend einer der vorhergehenden Ansprüche, dadurch gekennzeichnet, daß es darin besteht, die Membranen (5) auf einer Seite (25) mit Teilchen (P) zu bestrahlen, deren Energie nicht ausreicht, die Membranen zu durchqueren, die Membranen (5) umzudrehen, um sie auf der anderen Seite (26) mit Teilchen (P) zu bestrahlen, deren Energie nicht ausreicht, die Membranen zu durchqueren, die aber ausreicht, um die vor dem Umdrehen bestrahlten Teile der Membranen zu erreichen, und die bestrahlte Membranen einer chemischen Reagenz auszusetzen, die Poren um die Stellen erzeugt, wo die Teilchen (P) durchgegangen sind.

9. Verfahren zum Herstellen von mikroporösen Membranen nach Anspruch 8, dadurch gekennzeichnet, daß die Teilchen (P) von einem Beschleuniger (1) erzeugte Ionen sind.

10. Verfahren zum Herstellen von mikroporösen Membranen nach Anspruch 8, dadurch gekennzeichnet, daß die Membranen (5) auf eine Rolle (10) gespannt und gekrümmt sind.

**Claims**

1. Microporous membrane obtained by the irradiation of particles (P) followed by chemical etching producing pores (33, 34) along the impact lines (23, 24) of the particles, characterized in that it comprises a first network (33) of pores issuing only on one face (25) of the membrane (5), a second network of pores (34) only issuing on the other face (26) of the membrane (5) and in that pores of the first network (33) meet pores of the second network (34) in a median area (20) of membrane (5).

2. Microporous membrane according to claim 1, characterized in that the pores of at least one network penetrate the membrane obliquely.

3. Microporous membrane according to claim 2, characterized in that the pores of the first network (33) meet the pores of the second network (34) forming an angle of approximately 160°.

4. Microporous membrane according to either of the claims 2 and 3, characterized in that the pores of at least one network penetrate the membrane in accordance with different obliquities ($\pm\varphi_1$).

5. Microporous membrane according to any one of the claims 1 to 4, characterized in that the ratio of the total section of the pores of the networks (33, 34) to the surface of the membrane is below 0.35.

6. Microporous membrane according to any one of the claims 1 to 5, characterized in that the median area (20) of the membrane has a thickness between 10 and 200 microetres.

7. Microporous membrane according to any one of the claims 1 to 6, characterized in that the median area of the membrane is located between two surface areas (21, 22) of thickness between 5 and 50 micrometres.

8. Process for the production of microporous membranes, characterized in that it consists of irradiating the membranes (5) on one face (25) by particles (P) with an inadequate energy to traverse the membranes, followed by the reversing of the membranes (5) in order to irradiate the other face (26) by particles (P) of an inadequate energy to traverse the membranes, but which is adequate for reaching the parts of the membranes irradiated prior to reversal, and exposing the irradiated membranes to a chemical reagent producing pores around locations where particles (P) have passed.

9. Process for the production of microporous membranes according to claim 8, characterized in that the particles (P) are ions from an accelerator (1).

10. Process for the production of microporous membranes according to claim 8, characterized in that the membranes (5) are taut and curved inwards on a roller (10).

FIG. 1

FIG. 2

FIG. 3

FIG. 4

FIG. 5